# EUROPEAN PATENT SPECIFICATION

(11) **EP 3 521 364 B1**
(45) Date of publication and mention of the grant of the patent: **15.12.2021**
(21) Application number: 17856424.1
(22) Date of filing: 29.09.2017
(51) Int. Cl.: C07F 9/40, C08F 220/14, B29C 39/02

(54) **COPOLYMER COMPOSITION HAVING PHOSPHONATE GROUP**
COPOLYMERZUSAMMENSETZUNG MIT PHOSPHONATGRUPPE
COMPOSITION DE COPOLYMÈRE COMPRENANT UN GROUPE PHOSPHONATE

(30) Priority: 30.09.2016 JP 2016194925
(43) Date of publication of application: 07.08.2019
(73) Proprietor: Kuraray Co., Ltd., Okayama 710-0801 (JP)
(72) Inventor: FUKUMOTO, Takashi, Tainai-shi Niigata 959-2691 (JP); ABE, Toru, Tainai-shi Niigata 959-2691 (JP); WATANABE, Kenji, Tainai-shi Niigata 959-2691 (JP); OKABE, Fumihiko, Tainai-shi Niigata 959-2691 (JP); NAKAHARA, Atsuhiro, Tainai-shi Niigata 959-2691 (JP)
(74) Representative: Müller-Boré & Partner Patentanwälte PartG mbB
(86) International application number: PCT/JP2017/035453
(87) International publication number: WO 2018/062475

(56) References cited:
- EP-A1- 2 957 579
- WO-A1-2014/125555
- WO-A1-2016/024614
- WO-A1-2016/024614
- FR-A1- 2 335 516
- JP-A- S59 206 396
- JP-A- 2003 137 915
- JP-A- 2003 137 915
- JP-A- 2013 082 814
- JP-A- 2013 082 814
- US-A1- 2013 234 084

## Description

The present invention relates to a monomer composition for manufacturing a copolymer composition. More specifically, the present invention relates to a monomer composition for manufacturing a copolymer composition having flame retardance and high glass transition temperature, and facilitating a forming process thereof.

A resin having excellent transparency is used for applications such as optical members, lighting-apparatus members, signboards, and decoration members. These applications may require flame retardance. In order to improve flame retardance, a resin composition comprising a resin and an inorganic compound such as basic magnesium carbonate has been proposed ,for example, by Patent Document 1. However, this resin composition, which usually has low transparency, is not suitable for applications where high transparency is required, such as for optical materials.

In order to improve flame retardance, resin compositions have been suggested in which a resin is blended with a phosphoric acid ester or halogen-containing condensed phosphoric acid ester, for example, by Patent Documents 2, 3, 4 and 10. However, these resin compositions may raise surface whitening or flame retardance decrement with time due to bleed-out of the blended phosphoric acid ester or halogen-containing condensed phosphoric acid ester to the surface. Further, a resin composition comprising a halogen-containing condensed phosphoric acid ester is likely to generate a halogen gas upon combustion.

Moreover, copolymers obtained by copolymerizing a phosphonate monomer or a phosphoric acid ester monomer with an alkyl (meth) acrylic acid ester have been proposed by Patent Documents 5, 6, 7, 8 and 9, and Non-patent Documents 1 and 2. These copolymers can simultaneously have high flame retardance and high glass transition temperature. However, these copolymers have low formability as shown in Comparative Example 1.

Patent Document 1: JP S61-141759 A
Patent Document 2: JP S59-41349 A
Patent Document 3: JP H09-302191 A
Patent Document 4: JP H09-169882 A
Patent Document 5: JP H10-77308 A
Patent Document 6: JP 2003-137915 A
Patent Document 7: WO 2014/125555 A1
Patent Document 8: WO 2016/024614 A1 Patent
Document 9 : EP 2 957 579 A1
Patent Document 10 : FR 2 335 516 A1

Non-patent Document 1: Polymer Degradation and Stability, Vol. 70, 2000, p425-436.
Non-patent Document 2: Polymer Degradation and Stability, Vol. 74, 2001, p441-447.

An object of the present invention is to provide a monomer composition for manufacturing a copolymer composition having flame retardance and high glass transition temperature, and facilitating a forming process thereof.

Studies in order to achieve the above object have resulted in completion of the present invention including the following embodiments.
[1] A monomer composition comprising 100 parts by mass of a monomer represented by a formula (1) and 0.1 to 30 parts by mass of a compound represented by a formula (2), 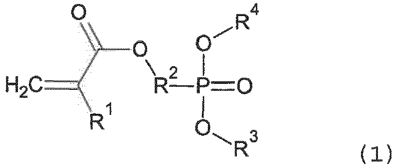
   wherein in the formula (1), R¹ represents a hydrogen atom or a methyl group, R² represents an alkylene group having 1 to 4 carbon atoms, and R³ and R⁴ each independently represent a hydrogen atom or an alkyl group having 1 to 10 carbon atoms, 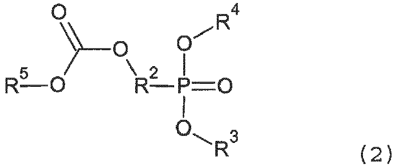
   wherein in the formula (2), R² represents an alkylene group having 1 to 4 carbon atoms, R³ and R⁴ each independently represent a hydrogen atom or an alkyl group having 1 to 10 carbon atoms, and R⁵ represents an alkyl group having 1 to 10 carbon atoms.
[2] A method for manufacturing the monomer composition according to [1], the method comprising allowing a compound represented by a formula (3) to react with a compound represented by a formula (4), 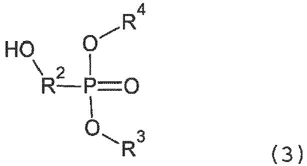
   wherein in the formula (3), R² represents an alkylene group having 1 to 4 carbon atoms, and R³ and R⁴ each independently represent a hydrogen atom or an alkyl group having 1 to 10 carbon atoms, 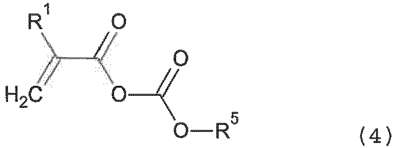
   wherein in the formula (4), R¹ represents a hydrogen atom or a methyl group, and R⁵ represents an alkyl group having 1 to 10 carbon atoms.
[3] A method for manufacturing a copolymer composition wherein the copolymer composition comprises 100 parts by mass of a copolymer comprising a structural unit derived from a monomer represented by a formula (1) and a structural unit derived from another radical polymerizable monomer, and having a content of a phosphorus atom derived from the monomer represented by the formula (1) of 0.5 to 6.0% by mass, and 0.01 to 7.0 parts by mass of a compound represented by a formula (2), 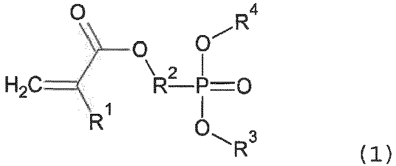
   wherein in the formula (1), R¹ represents a hydrogen atom or a methyl group, R² represents an alkylene group having 1 to 4 carbon atoms, and R³ and R⁴ each independently represent a hydrogen atom or an alkyl group having 1 to 10 carbon atoms, 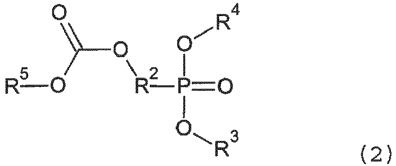
   wherein in the formula (2), R² represents an alkylene group having 1 to 4 carbon atoms, R³ and R⁴ each independently represent a hydrogen atom or an alkyl group having 1 to 10 carbon atoms, and R⁵ represents an alkyl group having 1 to 10 carbon atoms;
   wherein the method comprises the method for manufacturing a monomer composition according to [2] to obtain a monomer composition comprising 100 parts by mass of the monomer represented by a formula (1) and 0.1 to 30 parts by mass of the compound represented by a formula (2), and copolymerizing the monomer represented by the formula (1) with the other radical polymerizable monomer in the presence of the compound represented by the formula (2) .
[4] The method according to [3], wherein at least one of the radical polymerizable monomer is a (meth)acrylic acid ester.

The monomer composition of the present invention can be used for manufacturing a copolymer composition having excellent flame retardance as well as high glass transition temperature, and facilitates a forming process thereof, and thus can be used in various applications. Furthermore, the copolymer composition obtained by the method of the present invention has low haze and excellent transparency.

The copolymer composition obtained by the method according to the present invention comprises a compound (A) and a copolymer (B). The content of the compound (A) is 0.01 to 7.0 parts by mass, more preferably 0.1 to 5.0 parts by mass, even more preferably 0.3 to 3.0 parts by mass, and yet even more preferably 0.5 to 2.5 parts by mass relative to 100 parts by mass of the copolymer (B) . The content of the compound (A) falling within the above ranges can improve formability and flame retardance of the copolymer composition.

The compound (A) is represented by a formula (2).

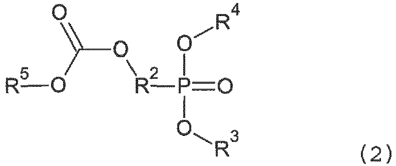

In the formula (2), R² represents an alkylene group having 1 to 4 carbon atoms. Alkylene groups are divalent hydrocarbon groups. As alkylene groups, mentioned can be a methylene group, an ethylene group (alias a dimethylene group), a trimethylene group, a propylene group (alias a propane-1,2-diyl group), a tetramethylene group, a butane-1,2-diyl group, a butane-1,3-diyl group, and the like. Among these, a methylene group or an ethylene group is preferred in view of economic efficiency.

In the formula (2), R³ and R⁴ each independently represent a hydrogen atom or an alkyl group having 1 to 10 carbon atoms. In the formula (2), R⁵ represents an alkyl group having 1 to 10 carbon atoms. As alkyl groups, mentioned can be a methyl group, an ethyl group, an n-propyl group, an i-propyl group, an n-butyl group, an i-butyl group, an s-butyl group, a t-butyl group, an n-pentyl group, an i-pentyl group, a neopentyl group, a 2-methylbutyl group, a 2,2-dimethylpropyl group, an n-hexyl group, an i-hexyl group, a heptyl group, an octyl group, a nonyl group, a decyl group, and the like. Among these, an ethyl group is preferred in view of high flame retardance.

Specific examples of the compound (A) can include dimethyl (methoxycarbonyloxy)methyl phosphonate, diethyl (ethoxycarbonyloxy)methyl phosphonate (alias diethyl (((ethoxycarbonyl)oxy) methyl) phosphonate), di-i-propyl (i-propyloxy carbonyloxy)methyl phosphonate, di-n-butyl (n-buthoxycarbonyloxy)methyl phosphonate, dimethyl 2-(methoxycarbonyloxy)ethyl phosphonate, diethyl 2-(ethoxycarbonyloxy)ethyl phosphonate, di-i-propyl 2- (i-propyloxycarbonyloxy) ethyl phosphonate, di-n-butyl 2-(n-buthoxycarbonyloxy)ethyl phosphonate, dimethyl 3-(methoxycarbonyloxy)propyl phosphonate, diethyl 3-(ethoxycarbonyloxy)propyl phosphonate, di-i-propyl 3-(i-propyloxycarbonyloxy)propyl phosphonate, di-n-butyl 3-(n-buthoxycarbonyloxy)propyl phosphonate, dimethyl 4-(methoxycarbonyloxy)methyl phosphonate, diethyl 4-(ethoxycarbonyloxy)butyl phosphonate, di-i-propyl 4-(i-propyloxycarbonyloxy)butyl phosphonate, di-n-butyl 4-(n-buthoxycarbonyloxy)butyl phosphonate, and the like. Among these, diethyl (ethoxycarbonyloxy)methyl phosphonate (abbreviated as DEECOMPO), diethyl 2-(ethoxycarbonyloxy)ethyl phosphonate, diethyl 3-(ethoxycarbonyloxy)propyl phosphonate, or diethyl 4-(ethoxycarbonyloxy)butyl phosphonate is preferred in view of high flame retardance and good forming processability.

The compound (A) is not particularly limited by a method of manufacture thereof. The compound (A) may be obtained by, for example, a condensation reaction of dialkyl (hydroxyalkyl)phosphonate (for example, see the formula (3)) and alkyl carbonohalidate (alias alkyl halogenoformate; for example, see a formula (7)); a reaction (a formula (B)) of a compound represented by the formula (3) (hereafter referred to as a compound (3)) and a compound represented by the formula (4) (hereafter referred to as a compound (4)) ; a reaction of the compound (3), a compound represented by the formula (7) (hereafter referred to as a compound (7)) and (meth)acrylic acid; and the like. Among these, the reaction (the formula (B)) of the compound (3) and the compound (4) ; or the reaction of the compound (3), the compound (7) and (meth) acrylic acid is preferred in view of the ability of simultaneously generating a monomer (I) and the compound (A).

The copolymer (B) comprises a structural unit derived from the monomer (I) (hereinafter referred to as a structural unit (I)) and a structural unit derived from a monomer (II) (hereinafter referred to as a structural unit (II)).

The monomer (I) is represented by the formula (1).

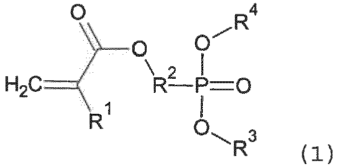

In the formula (1), R¹ represents a hydrogen atom or a methyl group. In the formula (1), R² represents an alkylene group having 1 to 4 carbon atoms. Alkylene groups are divalent hydrocarbon groups. As alkylene groups, mentioned can be a methylene group, an ethylene group (alias a dimethylene group), a trimethylene group, a propylene group (alias propane-1,2-diyl group), a tetramethylene group, a butane-1,2-diyl group, a butane-1,3-diyl group, and the like. Among these, a methylene group or an ethylene group is preferred in view of economic efficiency.

In the formula (1), R³ and R⁴ each independently represent a hydrogen atom or an alkyl group having 1 to 10 carbon atoms. Examples of the alkyl group can include a methyl group, an ethyl group, an n-propyl group, an i-propyl group, an n-butyl group, an i-butyl group, an s-butyl group, a t-butyl group, an n-pentyl group, an i-pentyl group, a neopentyl group, a 2-methylbutyl group, a 2,2-dimethylpropyl group, an n-hexyl group, an i-hexyl group, a heptyl group, an octyl group, a nonyl group, a decyl group, and the like. Among these, an ethyl group is preferred in view of high flame retardance.

Examples of the monomer (I) can include diethyl methacryloyloxymethyl phosphonate (alias methacryloyloxymethyl phosphonic acid diethyl, abbreviated as DEMMPO), diethyl 2-methacryloyloxyethyl phosphonate, diethyl 1-methacryloyloxyethyl phosphonate, dimethyl 3-methacryloyloxypropyl phosphonate, dimethyl 2-methacryloyloxypropyl phosphonate, dimethyl 4-methacryloyloxybutyl phosphonate, dimethyl 3-methacryloyloxybutyl phosphonate, dimethyl 2-methacryloyloxybutyl phosphonate; diethyl acryloyloxymethyl phosphonate, diethyl 2-acryloyloxyethyl phosphonate, dimethyl 3-acryloyloxypropyl phosphonate, dimethyl 2-acryloyloxypropyl phosphonate, dimethyl 4-acryloyloxybutyl phosphonate, dimethyl 3-acryloyloxybutyl phosphonate, dimethyl 2-acryloyloxybutyl phosphonate, and the like. Among these, diethyl methacryloyloxymethyl phosphonate and diethyl 2-methacryloyloxyethyl phosphonate are preferred in view of improving flame retardance of the resulting copolymer. These monomers (I) may be used alone or in combination of two or more.

The monomer (I) can be obtained by a known synthesis reaction. The monomer (I) can be obtained by, for example, a dehydration condensation reaction of dialkyl (hydroxyalkyl) phosphonate (for example, refer to the formula (3)) and (meth)acrylic acid; a transesterification reaction of dialkyl (hydroxyalkyl) phosphonate and (meth) acrylic acid ester; a condensation reaction of dialkyl (hydroxyalkyl) phosphonate and (meth)acrylic acid halide; a condensation reaction of dialkyl (hydroxyalkyl) phosphonate and (meth)acrylic acid anhydride; a condensation reaction of dialkyl (hydroxyalkyl) phosphonate and acid anhydride made from (meth) acrylic acid and a different oxo acid (for example, alkyl (meth)acryloyl carbonate such as ethyl (meth)acryloyl carbonate (for example, see the formula (4)); alkyl (meth)acryloyl sulfonate such as (meth)acrylic methanesulfonic anhydride (for example, see the formula (5)); aryl (meth) acryloyl sulfonate such as (meth)acrylic toluenesulfonic anhydride; carbonic (meth)acrylic anhydride such as (meth)acrylic pivalic anhydride; for example, see the formula (6)); a reaction of dialkyl (hydroxyalkyl) phosphonate and alkyl carbonohalidate (alias alkyl halogenoformate; for example, see the formula (7)) or alkyl hydrogen carbonate (alias carbonic acid monoalkyl ester) and (meth)acrylic acid; and the like.

Among these, the reaction (formula (B)) of the compound (3) and the compound (4) or the reaction of the compound (3), the compound (7) and (meth) acrylic acid is preferred in view of economic efficiency and the like in production of a monomer composition comprising the monomer (I) and the compound (A). The monomer composition of the present invention preferably comprises 0.1 to 30 parts by mass, more preferably 1 to 10 parts by mass of the compound (A) relative to 100 parts by mass of the monomer (I) . 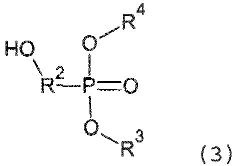 In the formula (3), R² represents an alkylene group having 1 to 4 carbon atoms, and R³ and R⁴ each independently represent a hydrogen atom or an alkyl group having 1 to 10 carbon atoms. 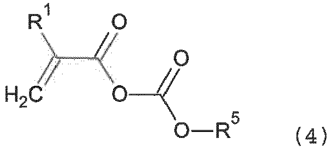 In the formula (4), R¹ represents a hydrogen atom or a methyl group, and R⁵ represents an alkyl group having 1 to 10 carbon atoms. 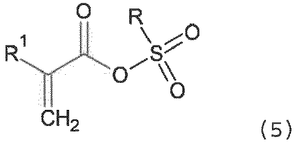 In the formula (5), R¹ represents a hydrogen atom or a methyl group, and R represents an alkyl group having 1 to 10 carbon atoms or the like. 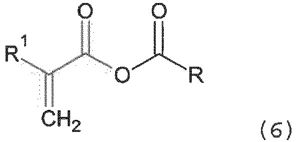 In the formula (6), R¹ represents a hydrogen atom or a methyl group, and R represents an alkyl group having 4 to 10 carbon atoms or the like. 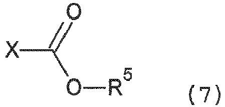 In the formula (7), X represents a halogeno group, and R⁵ represents an alkyl group having 1 to 10 carbon atoms.

The reaction (see the formula (B)) of the compound (3) and the compound (4) can be performed by, for example, an approach of adding a base to a mixture of the compound (3) and the compound (4). The usage amount of the compound (4) is preferably 1.0 to 3.0, more preferably 1.0 to 1.5 by molar ratio relative to the compound (3).

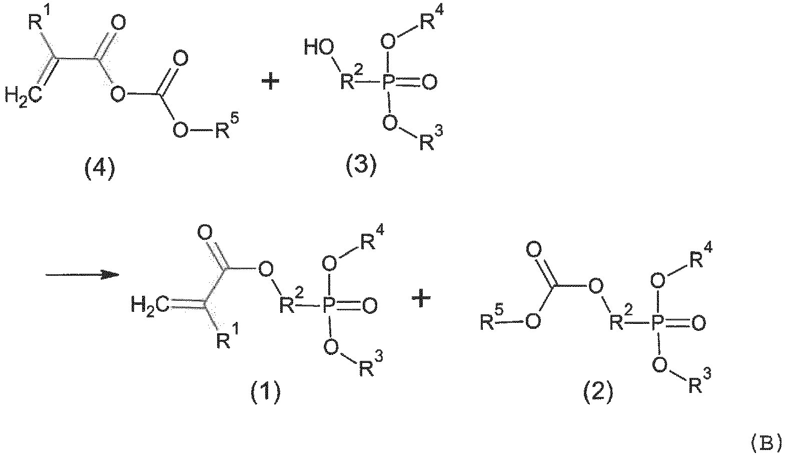

Examples of the compound (3) can include diethyl hydroxymethyl phosphonate (alias diethyl phosphonomethanol), diethyl 2-hydroxyethyl phosphonate, diethyl 1-hydroxyethyl phosphonate, dimethyl 3-hydroxypropyl phosphonate, dimethyl 2-hydroxypropyl phosphonate, dimethyl 4-hydroxybutyl phosphonate, dimethyl 3-hydroxybutyl phosphonate, dimethyl 2-hydroxybutyl phosphonate, and the like.

Examples of the compound (4) can include methyl (meth)acryloyl carbonate, ethyl (meth)acryloyl carbonate, propyl (meth)acryloyl carbonate, i-propyl (meth)acryloyl carbonate, t-butyl (meth)acryloyl carbonate, i-butyl (meth)acryloyl carbonate, n-butyl (meth)acryloyl carbonate, s-butyl (meth)acryloyl carbonate, and the like.

It is assumed that in the reaction of the compound (3), the compound (7) and (meth) acrylic acid, a reaction represented by a formula (A) and the reaction represented by the formula (B) occur in a sequential manner, or a reaction represented by a formula (C) occurs.

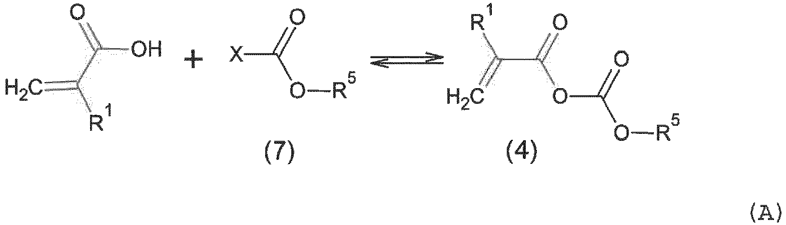

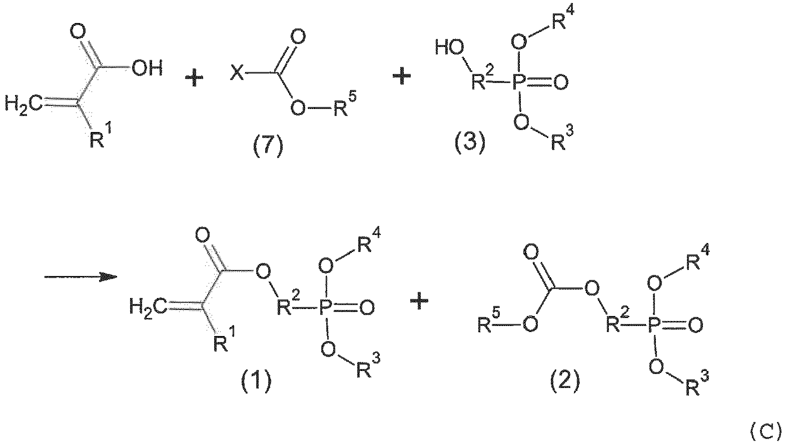

The reaction of the compound (3), the compound (7) and (meth)acrylic acid can be performed by an approach of adding a mixture of (meth)acrylic acid and a base to a mixture of the compound (3) and the compound (7); an approach of adding a mixture of (meth)acrylic acid and a base to the compound (7) and then adding the compound (3) to the resulting material; an approach of adding a base to a mixture of the compound (3), the compound (7) and (meth) acrylic acid; and the like. Among these, the approach of adding a mixture of (meth)acrylic acid and a base to the compound (7) and then adding the compound (3) to the resultant material is preferred in view of less unwanted impurities.

The usage amount of (meth) acrylic acid is preferably 1.0 to 3.0, more preferably 1.0 to 1.5 by molar ratio relative to the compound (3).

Examples of the compound (7) can include methyl chloroformate, ethyl chloroformate (alias ethyl chlorocarbonate), n-propyl chloroformate, i-propyl chloroformate, n-butyl chloroformate, methyl bromoformate, ethyl bromoformate, n-propylbromoformate, i-propyl bromoformate, n-butyl bromoformate, and the like. Methyl chloroformate or ethyl chloroformate is preferred in view of availability, low cost, and the like. The usage amount of the compound (7) is preferably 1.0 to 3.0, more preferably 1.0 to 1.5 by molar ratio relative to (meth)acrylic acid.

Examples of a base for use in the reaction of the compound (3) and the compound (4) or the reaction of the compound (3), the compound (7) and (meth) acrylic acid can include nitrogen-containing organic basic compounds such as triethylamine, diisopropylethylamine, tributylamine, and pyridine; and inorganic basic compounds such as sodium hydroxide, potassium hydroxide, sodium carbonate, and potassium carbonate. Nitrogen-containing organic basic compounds are preferably used.

The usage amount of the base in the reaction of the compound (3) and the compound (4) is preferably 1.0 to 3.0, more preferably 1.0 to 1.5 by molar ratio relative to the compound (3).

The usage amount of the base in the reaction of the compound (3), the compound (7) and (meth) acrylic acid is preferably 1.0 to 3.0, more preferably 1.0 to 1.5 by molar ratio relative to (meth)acrylic acid.

In the reaction of the compound (3) and the compound (4) or the reaction of the compound (3), the compound (7) and (meth) acrylic acid, a solvent may be used or may not be used. Examples of a solvent which can be used can include aromatic hydrocarbon solvents such as benzene, toluene, and xylene; nitrile solvents such as acetonitrile, benzonitrile, and propionitrile; ether solvents such as tetrahydrofuran, diisopropyl ether, and 4-methyltetrahydropyran; chlorine solvents such as dichloromethane, chloroform, and chlorobenzene; saturated hydrocarbon solvents such as hexane, cyclohexane, and pentane; and the like. Aromatic hydrocarbon solvent or saturated hydrocarbon solvent is preferably used in view of an influence on environments, easiness of post-processing treatment, and the like. When a solvent is used, The usage amount of the solvent is not limited, but is preferably 1 to 100 parts by mass, more preferably 1 to 10 parts by mass relative to 1 part by mass of the compound (3).

A temperature during the reaction of the compound (3) and the compound (4) or the reaction of the compound (3), the compound (7) and (meth) acrylic acid is preferably -30 to 150 °C, more preferably -20 to 120 °C.

The monomer (I) or the compound (A), which is a product from the above reactions, may be purified by a post-processing treatment commonly performed in synthetic organic chemistry, such as recrystallization, distillation, column chromatography, extraction, washing, and concentration.

In view of balancing flame retardance and thermal resistance, the amount of the structural unit (I) contained in the copolymer (B) is preferably not less than 1.8 mol% and not more than 28 mol%, more preferably not less than 3.6 mol% and not more than 25 mol% relative to a total of the structure units contained in the copolymer. The flame retardance of the copolymer tends to be improved as the content of the structural unit (I) increases. The glass-transition temperature of the copolymer tends to be increased as the content of the structural unit (I) decreases.

The monomer (II) is a radical polymerizable monomer other than the monomer (I). There is no particular limitation for the radical polymerizable monomer, but the followings may be used: (meth)acrylic acid ester, (meth) acrylic acid, vinyl aromatic hydrocarbons such as styrene, α-methylstyrene, p-methylstyrene, and m-methylstyrene; vinyl alicyclic hydrocarbons such as vinyl cyclohexane, vinyl cyclopentane, vinyl cyclohexene, vinyl cycloheptane, vinyl cycloheptene, and vinyl norbornene; ethylenic unsaturated dicarboxylic acids such as maleic anhydride, maleic acid, and itaconic acid; olefins such as ethylene, propylene, 1-butene, isobutylene, and 1-octene; conjugated dienes such as butadiene, isoprene, and myrcene; acrylamide; methacrylamide; acrylonitrile; methacrylonitrile; vinyl acetate; vinyl ketone; vinyl chloride; vinylidene chloride; vinylidene fluoride; and the like. These may be used alone or in combination of two or more. It is noted that the term "(meth) acrylic" means "methacrylic or acrylic." Among these, (meth)acrylic acid ester and (meth) acrylic acid are preferred in view of transparency, flame retardance, and weather resistance.

In particular, in (meth)acrylic acid ester having a secondly and tertiary hydrocarbon group, the ester group tends to undergo decomposition to form (meth) acrylic acid upon combustion of a copolymer composition. (Meth)acrylic acid tends to improve the water-absorbability and thermal resistance of the copolymer. Combined use of (meth)acrylic acid and (meth)acrylic acid ester can lead to a copolymer composition having well-balanced thermal resistance, water-absorbability and flame retardance.

Examples of (meth)acrylic acid ester can include methyl (meth)acrylate, (meth)acrylic acid alkyl-substituted monocyclic aliphatic hydrocarbon ester such as 4-methylcyclohexyl (meth)acrylate, 2-methylcyclohexyl (meth)acrylate, 4-isopropylcyclohexyl (meth)acrylate, 2-isopropylcyclohexyl (meth)acrylate, 4-t-butylcyclohexyl (meth)acrylate, and 2-t-butylcyclohexyl (meth)acrylate; (meth)acrylic acid polycyclic aliphatic hydrocarbon ester such as 2-norbornyl (meth)acrylate, 2-methyl-2-norbornyl (meth)acrylate, 2-ethyl-2-norbornyl (meth)acrylate, 2-isobornyl (meth)acrylate, 2-methyl-2-isobornyl (meth)acrylate, 2-ethyl-2-isobornyl (meth)acrylate, 8-tricyclo[5.2.1.0^{2,6}]decanyl (meth) acrylate (alias tricyclodecanyl (meth)acrylate), 8-methyl-8-tricyclo[5.2.1.0^{2,6}]decanyl (meth) acrylate, 8-ethyl-8-tricyclo[5.2.1.0^{2,6}]decanyl (meth) acrylate, 2-adamanthyl (meth)acrylate, 2-methyl-2-adamanthyl (meth)acrylate, 2-ethyl-2-adamanthyl (meth)acrylate, 1-adamanthyl (meth)acrylate, 2-fenchyl (meth)acrylate, 2-methyl-2-fenchyl (meth)acrylate, 2-ethyl-2-fenchyl (meth)acrylate, decalin-1-yl (meth)acrylate, and decalin-2-yl (meth)acrylate; isobutyl (meth)acrylate; s-butyl (meth)acrylate; t-butyl (meth)acrylate; 1-methylbutyl (meth)acrylate; 2-methylbutyl (meth)acrylate; 1,1-dimethylpropyl (meth)acrylate; 1,3-dimethylbutyl (meth)acrylate; 2-ethylbutyl (meth)acrylate; 2-methylpentyl (meth)acrylate; and the like. Among these, methyl (meth)acrylate, 2-isobornyl (meth) acrylate, 8-tricyclo[5.2.1.0^{2,6}]decanyl (meth)acrylate, 4-t-butylcyclohexyl methacrylate, isobutyl methacrylate, s-butyl methacrylate, and t-butyl methacrylate are more preferred in view of economic efficiency, transparency, and flame retardance. These may be used alone or in combination of two or more.

In view of balancing of flame retardance and thermal resistance, the amount of the structural unit (II) contained in the copolymer (B) is preferably not less than 72 mol% and not more than 98.2 mol%, more preferably not less than 75 mol% and not more than 96.4 mol% relative to the total of the structure units contained in the copolymer.

As examples of the copolymer (B), mentioned can be methyl methacrylate/methacrylic acid/diethyl methacryloyloxymethyl phosphonate copolymer, methyl methacrylate/methacrylic acid/diethyl 2-methacryloyloxyethyl phosphonate copolymer, methyl methacrylate/acrylic acid/diethyl methacryloyloxymethyl phosphonate copolymer, methyl methacrylate/acrylic acid/diethyl 2-methacryloyloxyethyl phosphonate copolymer, methyl methacrylate/8-tricyclo [5.2.1.0^{2,6}]decanyl methacrylate/diethyl methacryloyloxymethyl phosphonate copolymer, methyl methacrylate/8-tricyclo [5.2.1.0^{2,6}] decanyl methacrylate/diethyl 2-methacryloyloxyethyl phosphonate copolymer, methyl methacrylate/2-isobornyl methacrylate/diethyl methacryloyloxymethyl phosphonate copolymer, methyl methacrylate/2-isobornyl methacrylate/diethyl 2-methacryloyloxyethyl phosphonate copolymer, methyl methacrylate/t-butyl methacrylate/diethyl methacryloyloxymethyl phosphonate copolymer, methyl methacrylate/t-butyl methacrylate/diethyl 2-methacryloyloxyethyl phosphonate copolymer, methyl methacrylate/8-tricyclo [5 .2 .1. 0^{2,6}] decanyl methacrylate/diethyl methacryloyloxymethyl phosphonate/methyl acrylate copolymer, methyl methacrylate/8-tricyclo[5.2.1.0^{2,6}]decanyl methacrylate/diethyl 2-methacryloyloxyethyl phosphonate/methyl acrylate copolymer, methyl methacrylate/2-isobornyl methacrylate/diethyl methacryloyloxymethyl phosphonate/methyl acrylate copolymer, methyl methacrylate/2-isobornyl methacrylate/diethyl 2-methacryloyloxyethyl phosphonate/methyl acrylate copolymer, methyl methacrylate/t-butyl methacrylate/diethyl methacryloyloxymethyl phosphonate/methyl acrylate copolymer, methyl methacrylate/t-butyl methacrylate/diethyl 2-methacryloyloxyethyl phosphonate/methyl acrylate copolymer, methyl methacrylate/ 8-tricyclo[5.2.1.0^{2,6}]decanyl methacrylate/methacrylic acid/diethyl methacryloyloxymethyl phosphonate copolymer, methyl methacrylate/8-tricyclo[5.2.1.0^{2,6}]decanyl methacrylate/methacrylic acid/diethyl 2-methacryloyloxyethyl phosphonate copolymer, methyl methacrylate/2-isobornyl methacrylate/methacrylic acid/diethyl methacryloyloxymethyl phosphonate copolymer, methyl methacrylate/2-isobornyl methacrylate/methacrylic acid/diethyl 2-methacryloyloxyethyl phosphonate copolymer, methyl methacrylate/t-butyl methacrylate/methacrylic acid/diethyl methacryloyloxymethyl phosphonate copolymer, methyl methacrylate/t-butyl methacrylate/methacrylic acid/diethyl 2-methacryloyloxyethyl phosphonate copolymer, methyl methacrylate/8-tricyclo [5.2 .1. 0^{2,6}]decanyl methacrylate/methacrylic acid/diethyl methacryloyloxymethyl phosphonate/methyl acrylate copolymer, methyl methacrylate/8-tricyclo[5.2.1.0^{2,6}]decanyl methacrylate/methacrylic acid/diethyl 2-methacryloyloxyethyl phosphonate/methyl acrylate copolymer, methyl methacrylate/2-isobornyl methacrylate/methacrylic acid/diethyl methacryloyloxymethyl phosphonate/methyl acrylate copolymer, methyl methacrylate/2-isobornyl methacrylate/methacrylic acid/diethyl 2-methacryloyloxyethyl phosphonate/methyl acrylate copolymer, methyl methacrylate/t-butyl methacrylate/methacrylic acid/diethyl methacryloyloxymethyl phosphonate/methyl acrylate copolymer, methyl methacrylate/t-butyl methacrylate/methacrylic acid/diethyl 2-methacryloyloxyethyl phosphonate/methyl acrylate copolymer, and the like.

The copolymer (B) to be used in the present invention has a content of a phosphorus atom derived from the monomer (I) of preferably not less than 0.5% by mass and not more than 6.0% by mass, more preferably not less than 1.0% by mass and not more than 5.0% by mass relative to the copolymer (B). The content of the phosphorus atom falling within these ranges can produce a copolymer composition having well-balanced flame retardance and thermal resistance.

The copolymer (B) to be used in the present invention has a glass-transition temperature of preferably 110 to 180 °C, more preferably 120 to 165 °C. Decreasing of the glass-transition temperature tends to result in decreased thermal resistance of a copolymer composition, and increasing of the glass-transition temperature tends to result in making a brittler copolymer composition. It is noted that the term "glass-transition temperature (Tg)" refers to a midpoint glass-transition temperature determined in accordance with JIS K7121 as follows: an analyte is once heated to 230 °C, and then cooled to room temperature, and subsequently measurements are performed with a differential scanning calorimeter under a heating condition of 10 °C/min from room temperature to 230 °C to create a DSC curve, and the midpoint glass-transition temperature is determined from the DSC curve measured during the second heating.

A weight average molecular weight (Mw) of the copolymer (B) to be used in the present invention has a lower limit of preferably 100 thousand, more preferably 150 thousand, and even more preferably 300 thousand. An upper limit of the weight average molecular weight of the copolymer (B) is not restricted, and may be a molecular weight which is too high to be measured by GPC. The weight average molecular weight falling within these ranges can lead to a copolymer composition being good in impact resistance, toughness, and the like.

The copolymer (B) to be used in the present invention has a ratio (hereinafter, this ratio may be referred to as a "molecular weight distribution"), of the weight average molecular weight (Mw) to a number average molecular weight (Mn), of preferably 1.1 to 10.0, more preferably 1.5 to 5.0, and in particular preferably 1.6 to 3.0. When the molecular weight distribution falls within these ranges, the formability of the resulting copolymer composition, and the impact resistance, toughness, and the like of a shaped product obtained from the resulting copolymer composition is good.

It is noted that the weight average molecular weight and the molecular weight distribution are represented by values in terms of standard polystyrene as measured by GPC (gel permeation chromatography) . The weight average molecular weight and the molecular weight distribution as described above can be controlled by adjusting types, amounts, or the like of a polymerization initiator and a chain transfer agent.

The copolymer (B) may be obtained by copolymerizing the monomer (I) with the monomer (II). A manner of copolymerization is not restricted, can include, for example, emulsion polymerization, suspension polymerization, bulk polymerization, solution polymerization, or the like. Further, a reactive forming method such as cell cast polymerization is preferred because heat to which a copolymer is exposed can be reduced during forming, and a shaped product having a small yellow index can be obtained. Copolymerization can be initiated at a predetermined temperature in the presence of a polymerization initiator. A chain transfer agent may also be used to modulate the weight average molecular weight and others of the resulting copolymer.

The monomer (I) and the monomer (II) have a yellow index of preferably not more than 2, more preferably not more than 1 as measured with an optical path length of 3.2 mm. The smaller yellow index tends to be able to reduce coloring of the copolymer (B), decreasing a yellow index of a 3.2-mm thick test piece composed of the resulting copolymer compositions . It is noted that the yellow index of a monomer refers to a value corresponding to the degree of yellowness computed in accordance with JIS K7373 based on a value measured in accordance with JIS Z8722.

There is no particular limitation for a polymerization initiator to be used in the copolymerization as long as a reactive radical is generated. Examples thereof can include, organic peroxides such as t-hexyl peroxyisopropyl monocarbonate, t-hexyl peroxy 2-ethylhexanoate, 1,1,3,3-tetramethylbutyl peroxy 2-ethylhexanoate, t-butyl peroxypivalate, t-hexyl peroxypivalate, t-butyl peroxyneodecanoate, t-hexyl peroxyneodecanoate, 1,1,3,3-tetramethylbutyl peroxyneodecanoate, 1,1-bis(t-hexylperoxy)cyclohexane, benzoyl peroxide, 3,5, 5-trimethylhexanoyl peroxide, lauroyl peroxide; azo compounds such as 2,2'-azobis(2-methylpropionitrile), 2,2'-azobis(2-methylbutyronitrile), dimethyl 2,2'-azobis(2-methylpropionate); persulfates such as ammonium persulfate, potassium persulfate, sodium persulfate. Among these, azo compound is preferred. These polymerization initiators may be used alone or in combination of two or more. Further, the addition amount of a polymerization initiator and a manner of adding a polymerization initiator are not limited and may be appropriately configured depending on the purposes. For example, the amount of a polymerization initiator used for the copolymerization falls within a range of preferably 0.0001 to 0.2 part by mass, more preferably 0.001 to 0.1 part by mass relative to 100 parts by mass of the total of the monomers.

Examples of a chain transfer agent to be used in the copolymerization can include alkyl mercaptans such as n-octylmercaptan, n-dodecylmercaptan, t-dodecylmercaptan, 1,4-butanedithiol, 1,6-hexanedithiol, ethylene glycol bisthiopropionate, butanediol bisthioglycolate, butanediol bisthiopropionate, hexandiol bisthioglycolate, hexandiol bisthiopropionate, trimethylolpropanetris-(β-thiopropionate), pentaerythritol tetrakis thiopropionate; α-methylstyrene dimer; terpinolene; and the like. Among these, preferred are monofunctional alkyl mercaptans such as n-octylmercaptan, and n-dodecylmercaptan. These chain transfer agents may be used alone or in combination of two or more. The usage amount of the chain transfer agent is preferably 0.01 to 1 part by mass, more preferably 0.02 to 0.8 part by mass, and even more preferably 0.03 to 0.6 part by mass relative 100 parts by mass of the total of the monomers.

Materials to be used for manufacturing the copolymer (B), specifically, the monomer (I), the monomer (II), the polymerization initiator, the chain transfer agent and others, may be mixed to obtain a mixture and the mixture may be then added to a reactor. Alternatively, the materials to be used for manufacturing the copolymer (B) may be separately added to a reactor. In the present invention, preferably, the materials to be used for manufacturing the copolymer (B) are mixed to obtain a mixture, and the mixture is then added to a reactor. Such mixing is preferably performed under an atmosphere of an inert gas such as nitrogen gas.

A temperature at which copolymerization is performed is preferably 0 to 200 °C, more preferably 20 to 180 °C. Further, duration for which copolymerization is performed is depend on a reaction scale, but in view of economic efficiency, preferably 0.1 to 20 hours, more preferably 0.5 to 10 hours. Moreover, the copolymerization is preferably performed under an atmosphere of an inert gas such as a nitrogen gas.

The compound (A) may be present in a reaction system when the copolymerization is performed. As already described above, the monomer (I) and the compound (A) are simultaneously generated by the reaction of the compound (3) and the compound (4) or the reaction of the compound (3), the compound (7) and (meth)acrylic acid. A manufacturing process can be simplified by providing a monomer composition comprising the monomer (I) and the compound (A) to the copolymerization without isolating the monomer (I). It is noted that a monomer composition comprising the monomer (I) and the compound (A) is preferably regulated so that 0.1 to 10 parts by mass of the compound (A) is contained relative to 100 parts by mass of the monomer (I).

After completion of the copolymerization, unreacted monomers and a solvent may be removed according to a known method. Powderization-granulation, pelletization and the like may also be performed in order to facilitate forming of the copolymer.

The copolymer composition according to the present invention has a glass-transition temperature of preferably 90 to 170 °C, more preferably 100 to 160 °C. When the glass-transition temperature is extremely low, a shaped product composed of the resulting copolymer composition may have insufficient thermal resistance. When the glass-transition temperature is extremely high, a shaped product composed of the resulting copolymer composition may be brittle. It is noted that the glass-transition temperature is a value as measured in accordance with JIS K7121. That is, the glass-transition temperature as used herein refers to a midpoint glass-transition temperature determined as follows: the copolymer composition according to the present invention is once heated to 230 °C, and then cooled to room temperature, and subsequently a DSC curve is measured by differential scanning calorimetry under a heating condition of 10 °C/min from room temperature to 230 °C, and the midpoint glass-transition temperature is determined from the DSC curve measured during the second heating.

The copolymer composition according to the present invention may contain various additives, if desired. As the additives, mentioned can be antioxidants, thermal deterioration inhibitors, ultraviolet absorbers, light stabilizers, lubricants, parting agents, polymer processing aids, impact resistance modifiers, organic coloring agents, light diffusing agents, delustering agents, fluorescence substances, antistatic agents, flame retardants, plasticizers, inorganic fillers, fibers, and the like. The blended amounts of the various additives can be each appropriately determined within a range where the effects of the present invention are not impaired. The blended amounts of the various additives are each preferably 0.001 to 5 parts by mass, more preferably 0.01 to 1 part by mass relative to 100 parts by mass of the copolymer composition.

Antioxidants refer to substances themselves having an effect of preventing oxidative deterioration of a resin in the presence of oxygen. As the antioxidants, mentioned can be phosphorus antioxidants, hindered phenol antioxidants, thioether antioxidants, and the like. These antioxidants may be used alone or in combination of two or more. Among these, phosphorus antioxidant or hindered phenol antioxidant is preferred in view of effects of preventing deterioration of optical properties due to coloring. Phosphorus antioxidant and hindered phenol antioxidant are more preferably used in combination.

In combination use of phosphorus antioxidant and hindered phenol antioxidant, a proportion thereof is not restricted, but the mass ratio of phosphorus antioxidant to hindered phenol antioxidant is preferably 1/5 to 2/1, more preferably 1/2 to 1/1.

Examples of the phosphorus antioxidants can include 2,2-methylenebis(4,6-di-t-butylphenyl)octyl phosphite (produced by ADEKA; Product name: ADK STAB HP-10), tris(2,4-di-t-butylphenyl)phosphite (produced by BASF; Product name : IRUGAFOS 168), 3,9-bis(2,6-di-t-butyl-4-methylphenoxy)-2,4,8,10-tetr aoxa-3,9-diphosphaspiro[5.5]undecane (produced by ADEKA; Product name: ADK STAB PEP-36), and the like.

Examples of the hindered phenol antioxidants can include pentaerythrityl-tetrakis[3-(3,5-di-t-butyl-4-hydroxyp henyl) propionate] (produced by BASF; Product name IRGANOX 1010), octadecyl-3-(3,5-di-t-butyl-4-hydroxyphenyl)propionat e (produced by BASF; Product name IRGANOX 1076), and the like.

Thermal deterioration inhibitors are substances capable of preventing thermal deterioration of a copolymer by capturing a polymer radical arising upon exposure to high temperature under a condition substantially absent from oxygen. Examples of the thermal deterioration inhibitors can include 2-t-butyl-6-(3'-t-butyl-5'-methyl-hydroxybenzyl)-4-me thylphenyl acrylate (produced by Sumitomo Chemical Co., Ltd.; Product name Sumilizer GM), 2,4-di-t-amyl-6-(3',5'-di-t-amyl-2'-hydroxy-α-methylb enzyl) phenyl acrylate (produced by Sumitomo Chemical Co. , Ltd.; Product name Sumilizer GS), and the like.

Ultraviolet absorbers are compounds having the ability of absorbing ultraviolet light, which are said to have a function to primarily convert light energy into heat energy. As the ultraviolet absorbers, mentioned can be benzophenones, benzotriazoles, triazines, benzoates, salicylates, cyanoacrylates, oxalic anilides, malonates, formamidines, and the like. Among these, preferred are benzotriazoles, triazines, or an ultraviolet absorber having an εₘₐₓ of not more than 100 dm³mol⁻¹cm⁻¹ wherein the εₘₐₓ is a maximum value of the molar extinction coefficient at a wavelength of 380 to 450 nm.

Benzotriazoles, which are highly effective for preventing decrease in optical properties such as coloring due to ultraviolet exposure, are preferred as ultraviolet absorbers to be used when a film of the present invention is applied for optical uses. As the benzotriazoles, preferred are 2-(2H-benzotriazol-2-yl)-4-(1,1,3,3-tetrametylbutyl)p henol (produced by BASF; Product name: TINUVIN 329), 2-(2H-benzotriazol-2-yl)-4,6-bis(1-methyl-1-phenyleth yl) phenol (produced by BASF; Product name: TINUVIN 234), 2,2'-methylenebis[6-(2H-benzotriazol-2-yl)-4-t-octylp henol] (produced by ADEKA; LA-31), and the like.

Further, the ultraviolet absorber having the εₘₐₓ of not more than 1200 dm³mol⁻¹cm⁻¹ can prevent discoloration of the resulting film wherein the εₘₐₓ is a maximum value of the molar extinction coefficient at a wavelength of 380 to 450 nm. Examples of the ultraviolet absorber can include 2-ethyl-2'-ethoxy-oxalanilide (produced by Clariant Japan K.K.; Product name: Sanduvor VSU) and the like.

Among these ultraviolet absorbers, benzotriazoles are preferably used in view of the ability of preventing resin deterioration due to ultraviolet exposure.

Further, the triazine ultraviolet absorbers are preferably used when efficient absorption is desired near a wavelength of 380 nm. As the ultraviolet absorbers, mentioned can be 2,4,6-tris(2-hydroxy-4-hexyloxy-3-methylphenyl)-1,3,5 -triazine (produced by ADEKA; LA-F70) and the like.

As the flame retardants, mentioned can be, for example, organohalogen flame retardants such as tetrabromobisphenol A, decabromodiphenyloxide, and brominated polycarbonate; non-halogen flame retardants such as antimony oxide, aluminum hydroxide, zinc borate, phosphoric acid, anhydrous orthophosphoric acid, tricresyl phosphate, hydroxymethyldiethyl phosphonate, a reaction product of biphenyl-4,4'-diol/phenol/phosphoryl=trichloride having 4,4'-bis(diphenylphosphoryl)-1,1'-biphenyl as a main component (for example, FP800 from ADEKA), and the like.

Further described herein is a shaped product which comprises the copolymer composition obtained by the method of the present invention. A method of manufacturing the shaped product is not limited, but the shaped product can be made by, for example, the melt forming methods such as the T die method (the lamination method, the co-extrusion method, and the like), the inflation method (such as the co-extrusion method), the compression forming method, the blow forming method, the calendar forming method, the vacuum forming method, and the injection molding method (the insertion method, the two-color method, the pressing method, the core back method, the sandwich method, and the like) and the solution casting methods, and the like. The shaped product can also be obtained by reactive forming methods such as the cell cast polymerization method. The cell cast polymerization method is a method in which a shaped product can be obtained by casting a raw material liquid comprising a monomer, a polymerization initiator, and other materials into a desired mold, and allowing a polymerization reaction to occur in that mold. Among these forming methods, the T die method, the inflation method, the injection molding method, the cell cast polymerization method are preferred in view of high productivity, low cost, and the like. Further, there is no particular limitation for the thickness of the shaped product, preferably a cell-casted plate, of the present invention. For example, the shaped product having a thickness of 10 µm to 30 mm can be obtained by the aforementioned forming methods.

The shaped product may be obtained by mixing other polymers with the copolymer composition obtained by the method of the present invention in a rage where the effects of the present invention are not impaired. As such other polymers, mentioned can be polyolefin resins such as polyethylene, polypropylene, polybutene-1, poly-4-methylpentene-1, polynorbornene; ethylene ionomers; styrene resins such as a polystyrene, a styrene-maleic anhydride copolymer, a high impact polystyrene, an AS resin, an ABS resin, an AES resin, an AAS resin, an ACS resin, and an MBS resin; methyl methacrylate polymers, a methyl methacrylate-styrene copolymer; polyester resins such as polyethylene terephthalate, and polybutylene terephthalate; polyamides such as Nylon 6, Nylon 66, and polyamide elastomer; polycarbonates, polyvinyl chlorides, polyvinylidene chlorides, polyvinyl alcohols, an ethylene-vinylalcohol copolymer, polyacetals, polyvinylidene fluorides, polyurethanes, modified polyphenylene ethers, polyphenylene sulfides, silicone modified resins; acrylic rubbers, acrylic block copolymers, silicone rubbers; styrene thermoplastic elastomers such as SEPS, SEBS, and SIS; olefin rubbers such as IR, EPR, EPDM; and the like.

In the manufacturing of the shaped product, various additives may also be added, if desired, in a range where the effects are not impaired.

The shaped product may be used in manufacturing of a layered product. A layered product may be a laminated piece of the shaped products of the present invention together, or may be a laminated piece of the shaped product of the present invention with an additional material.

There is no particular limitation for a method of producing the layered product. Examples of the methods can include a method comprising co-extruding not less than two polymers (the co-extrusion method); a method comprising fusing not less than two shaped products by heat, ultrasound, high frequency wave, and the like (the fusion method) ; a method comprising allowing not less than two shaped products to adhere to each other with an ultraviolet curable adhesive, a thermosetting adhesive, a radiation curable adhesives, and the like (the adhesion method) ; a method comprising molding by pouring a molten polymer into a mold in which a sheet, a film, or the like is pre-arranged (the insert molding method); a method comprising depositing an additional base material by chemical vapor deposition or physical vapor deposition (the vapor deposition method); a method comprising applying a paint comprising an additional base material to form a coat (the application method); and the like. Further, in the fusion method or the adhesion method, a surface to be fused or a surface to adhere may be subjected to surface treatment with a known primer or may be subjected to corona discharge treatment, plasma treatment, and the like, before fusion or adhesion.

The additional material to be layered on the shaped product is not limited, and can be appropriately selected depending on the application of the resulting layered product. There is no particular limitation for an additional material to be used a case where the resulting layered product is used as an optical component, and examples thereof can include hard coating materials, antireflection materials, liquid crystal, cyclic olefin ring-opening polymers or hydrogenated products thereof, cyclic olefin addition polymers, aliphatic olefin resins, acrylic polymers, polycarbonate resins, liquid crystal polymers, soda glass, quartz glass, and the like.

A surface of the shaped product or the layered product comprising the shaped product may be subjected to a printing process, or may be subjected to a shaping process by means of cutting (shaving), embossing, or the like. An additional material may be layered by the insert molding method and the like after the printing or shaping, resulting in enclosure of a letter, a pattern, unevenness and the like formed by the printing or shaping between the shaped product of the present invention and the additional material. The enclosed letter, pattern, unevenness, and the like can be clearly observed because the shaped product is excellently transparent.

The shaped product is preferably in a form of a film or a sheet. In general, a film refers to a planar shaped product having a thickness of not less than 0.001 mm and not more than 0.25 mm, and a sheet refers to a planar shaped product having a thickness of more than 0.25 mm.

The shaped product has a thickness of preferably not less than 0.001 mm and less than 300 mm, more preferably not less than 0.005 mm and less than 200 mm, and even more preferably not less than 0.01 mm and less than 30 mm.

The shaped product, which is excellent in transparency, flame retardance, and thermal resistance, can be used in wide variety of fields such as the optical field, the food field, the medical field, the automobile field, and the electric/electronic field. For example, the shaped product is also useful for various optical members (finders, filters, prisms, Fresnel lens, and the like) of optical devices (microscopes, binoculars, cameras, and the like); various optical members (light guide films/sheets, phase difference films/sheets, polarizing films/sheets, polarizer protective films/sheets, light diffusing films/sheets, prism films/sheets, reflection films/sheets, antireflection films/sheets, viewing angle widening films/sheets, antiglare films/sheets, brightness enhancing films/sheets, front panels, and the like) for display devices (televisions, touch panels, personal computers, mobile terminals, and the like) ; optical members such as optical switches and optical connectors; illumination members such as illumination covers, and the like; and the like. The shaped product is also useful for outdoor applications such as house components (roof, window, rainwater pipes, wall, and the like), retroreflection films/sheets, agricultural films/sheets, signboards (gas station signboards, display boards, store signboards, and the like), decoration members, and sound insulating walls. Further, the shaped product of the present invention is useful for indoor signboards in station yards, buildings, or houses; building materials; and the like.

In what follows, the embodiments of the present invention will be described in more detail with reference to Examples. The present invention shall not be limited to these Examples. Unless otherwise stated, the terms "part" and "%" mean "part by mass" and "% by mass," respectively.

Values of physical properties of copolymers and shaped products were measured by the following methods.

### [Total light transmittance]

In test pieces with a thickness of 3.2 mm obtained from Examples, a total light transmittance (Tₐₗₗ) with an optical path length of 3.2 mm was measured using an HR-100 (model number) from Murakami Color Research Laboratory Co., Ltd. in accordance with JIS K7361-1.

### [Haze]

In test pieces with a thickness of 3.2 mm obtained from Examples, a haze (H) with an optical path length of 3.2 mm was measured using a haze meter (Murakami Color Research Laboratory Co., Ltd., HM-150) in accordance with JIS K7136.

### [Yellow index]

In test pieces with a thickness of 3.2 mm obtained from Examples, a color property was measured using a colorimetric color-difference meter ZE-2000 from Nippon Denshoku Industries Co., Ltd. in accordance with JIS Z8722. Based on the above measurement value, the degree of yellowness (yellow index (YI)) was computed in accordance with JIS K7373.

### [Glass-transition temperature]

In accordance with JIS K7121, test pieces with a thickness of 3.2 mm obtained from Examples were once heated to 230 °C, and then cooled to room temperature, and subsequently DSC curves were measured by differential scanning calorimetry under a heating condition of 10 °C/min from room temperature to 230 °C. A midpoint glass-transition temperature determined from the DSC curve measured at the second heating was used as a glass-transition temperature (Tg) for use in the present invention. Here, a DSC-50 (model number) from Shimadzu Corporation was used as a measurement device.

### [Formability]

Test pieces with a thickness of 3.2 mm obtained from Examples were each set between a pair of planar molds heated at 135 °C, and subjected to vacuum pressure forming at 0.95 MPa for 900 seconds. A companion of the planar molds had a surface on which depressed portions each with a depth of 2 µm and a diameter of 5 µm were evenly arranged at intervals of 50 µm through the length and breadth thereof, and another companion thereof had a surface which had been mirror finished evenly.

Formability that the depressed portions of the mold were completely filled with a resin by pressurization or the resulting protruded portions weren't ripped away upon release from the mold was evaluated according to the following indices by microscopic observation of the protruded portions on the surface of a sheet obtained from the above vacuum pressure forming.
A: The protruded portions don't have any defect.
B: At least one of the protruded portions has a defect.

### [Flame retardance 1 (UL94)]

Test pieces with a thickness of 3.2 mm obtained from Examples were left for 48 hours under an environment of 23 °C and 50% RH. Then, the test pieces held vertically were each brought into direct contact with a flame from a burner twice for 10 seconds in accordance with the UL94V test. Flame retardancy of each test piece was evaluated by afterflame time and drip properties thereof. Very poor flame retardancy and failing to meet the standards of the UL94V test were denoted by "BS" (Below Standard).

### [Flame retardance 2 (flame resistance)]

Flame resistance was evaluated in accordance with JIS K6911 (1995) 5.24, Flame resistance Method A.

Test pieces of 127 mm in length × 12.7 mm in width × 3.2 mm in thickness were cut out from sheets obtained from Examples.

Marked lines were drawn at 25 mm and 100 mm from one end (free end) of each of the test pieces. A burner was mounted on a support base having a tilt angle of 30 degrees, and held in a state where the burner inclined 30 degrees to the vertical line. A test piece was held at one end with a gripper located at a laboratory stand in a room in which air flow was not felt so that the test piece was oriented horizontally in the length direction and at an angle of 45 degrees to the horizon in the width direction, and the bottom of the test piece was positioned at the tip height of a blue flame from the burner. The bottom of the free end of the test piece was brought into contact with the tip of a blue flame from the burner for 30 seconds while maintaining an angle of 30 degrees, and a stopwatch was started at the same time when the flame was removed. The flame remained away from the test piece at not less than 450 mm. The stopwatch was stopped when a flame from the test piece disappeared. That time was then read to the second, and considered as a burning time. Here, a test piece was considered as "flammable" if a flame from the test piece did not disappear for not less than 180 seconds. After extinction, the length of burned portion at the bottom of the test piece was measured, and the distance of burning was measured to the millimeter (mm). A test piece was considered as "nonflammable" if the distance of burning was not more than 25 mm, and "self-extinguishing" if the distance of burning was more than 25 mm and not more than 100 mm.

Compounds and others used in Examples are abbreviated as follows.
MMA: methyl methacrylate
MA: methyl acrylate
MAA: methacrylic acid
DEMMPO: diethyl methacryloyloxymethyl phosphonate (alias methacryloyloxymethyl phosphonic acid diethyl ester) DEECOMPO: diethyl(((ethoxycarbonyl)oxy)methyl) phosphonate
TCDMA: tricyclodecanyl methacrylate (alias 8-tricyclo [5.2 .1. 0^{2,6}]decanyl methacrylate)
PH-C: 1,1-di(tert-butylperoxy)cyclohexane (NOF Corporation; Perhexa C)
AIBN: 2,2'-azobis(isobutyronitrile) (Wako Pure Chemical Industries, Ltd.; AIBN)

### <Manufacturing Example 1>

Into a flask purged with nitrogen, charged were 72.4 parts of ethyl chlorocarbonate (alias ethyl chloroformate), 175 parts of toluene, and 0.0011 part of 6-tert-butyl-2,4-xylenol. The inner temperature was adjusted to 30 °C. A mixture of 62.0 parts of MAA and 78.2 parts of triethylamine was added dropwise over 1 hour through a dropping funnel. And, 100 parts of diethyl phosphonomethanol (alias diethyl hydroxymethyl phosphonate) was added dropwise over 1 hour through the dropping funnel. Subsequently, a reaction was allowed to occur at 30 °C with stirring for 16 hours. The resulting liquid was filtered to remove triethylamine hydrochloride. Water in an amount of 200 parts was added to a filtrate, and stirred. Then, an aqueous layer was removed using a separatory funnel. To the remaining organic layer, added was 0.0011 part of 6-tert-butyl-2,4-xylenol. Then, toluene was distilled away under reduced pressure to obtain a mixture (a monomer composition (Ia)) of 114.7 parts of DEMMPO and 6.5 parts of DEECOMPO.

### <Manufacturing Example 2>

A mixture (a monomer composition (Ib) ) of 111.1 parts of DEMMPO and 7.8 parts of DEECOMPO was obtained in the same manner as in Manufacturing Example 1 except that the inner temperature was 60 °C.

### <Manufacturing Example 3>

Into a flask purged with nitrogen, charged were 72.4 parts of ethyl chlorocarbonate, 175 parts of toluene, 0.0011 part of 6-tert-butyl-2,4-xylenol, and 100 parts of diethyl phosphonomethanol. Then, the inner temperature was adjusted to 60 °C. A mixture of 62.0 parts of MAA and 72.2 parts of triethylamine was added dropwise over 1 hour through a dropping funnel. Subsequently, a reaction was allowed to occur at 60 °C with stirring for 16 hours. The resulting liquid was filtered to remove triethylamine hydrochloride. Water in an amount of 200 parts was added to a filtrate, and stirred. Subsequently, an aqueous layer was removed using a separatory funnel. To the remaining organic layer, added was 0.0011 part of 6-tert-butyl-2,4-xylenol. Then, toluene was distilled away under reduced pressure to obtain a mixture (a monomer composition (Ic)) of 86.4 parts of DEMMPO and 23.1 parts of DEECOMPO.

### <Manufacturing Example 4>

Into a flask purged with nitrogen, charged were 100 parts of diethyl phosphonomethanol, 0.0011 part of 6-tert-butyl-2,4-xylenol, 175 parts of toluene, and 72.2 parts of triethylamine. Then the inner temperature was adjusted to 3 °C. While maintaining the inner temperature of not more than 10 °C, 69.0 parts of methacrylic acid chloride was added dropwise through a dropping funnel. Subsequently, a reaction was allowed to occur at the inner temperature of 3 to 5 °C with stirring for 10 hours. The resulting liquid was filtered to remove triethylamine hydrochloride. Water in an amount of 200 parts was added to a filtrate, and stirred. Subsequently, an aqueous layer was removed using a separatory funnel. To the remaining organic layer, added was 0.0011 part of 6-tert-butyl-2,4-xylenol. Then, toluene was distilled away under reduced pressure to obtain 134. 6 parts of DEMMPO (a monomer (Id)).

### <Example 1>

A monomer mixture was obtained by mixing 30 parts of the monomer composition (Ia) (i.e. a mixture of 28.4 parts of DEMMPO and 1.6 parts of DEECOMPO), 15 parts of TCDMA, 6 parts of MAA, and 49 parts of MMA. To the monomer mixture, 0.13 part of a polymerization initiator (i.e. a mixture of 0.09 part of AIBN and 0.04 part of PH-C) and 0.1 part of an internal release agent (Product name, ZELEC UN) were added and dissolved to obtain a liquid raw material.

The liquid raw material was injected into a glass cell composed of two water-repellent glass plates (10 mm in thickness, 30 cm square) and a vinyl-chloride resin gasket. It was degassed for 3 minutes under 10 mmHg. Subsequently, the glass cell was held at 70 °C for 3 hours, and then 120 °C for 2 hours to perform a polymerization reaction. The glass cell was cooled to room temperature, and then disassembled to take out a 3.2-mm thick sheet. A test piece of 127 mm in length × 13 mm in width × 3.2 mm in thickness was cut out from the sheet obtained. The test piece was subjected to property evaluation tests of flame resistance, transparency, and others. A polymer constituting the sheet did not dissolve in a solvent, but merely underwent swelling. Therefore, the molecule weight thereof was not able to be measured by GPC. The weight average molecular weight of the polymer was assumed to be not less than one million g/mol.

The polymer constituting the sheet was allowed to swell in deuterated chloroform. Under that condition, ¹H-NMR measurements were performed (nuclear magnetic resonance system (Bruker ULTRA SHIELD 400 PLUS) ; solvent: deuterated chloroform; measured nuclear species: ¹H; measurement temperature: room temperature; cumulated number: 64) to compute the contents of unreacted reactants and others remaining in the sheet (the contents of unreacted reactants) and the content (in % by mass) of phosphorus atoms derived from DEMMPO. Evaluation results are shown in Table 1. Meanwhile, the contents of unreacted reactants in the table are expressed in parts by mass relative to 100 parts by mass of the resulting polymers.

### <Example 2>

A sheet was obtained in the same manner as in Example 1 except that 30 parts of the monomer composition (Ia) was changed to 30 parts of the monomer composition (Ic) (i.e. a mixture of 23.7 parts of DEMMPO and 6.3 parts of DEECOMPO). Evaluation results are shown in Table 1.

### <Example 3>

A sheet was obtained in the same manner as in Example 1 except that 30 parts of the monomer composition (Ia) and 49 parts of MMA were changed to 10 parts of the monomer composition (Ia) (i.e. a mixture of 9.5 parts of DEMMPO and 0.5 part of DEECOMPO) and 69 parts of MMA. Evaluation results are shown in Table 1.

### <Example 4>

A sheet was obtained in the same manner as in Example 3 except that 10 parts of the monomer composition (Ia) was changed to 10 parts of the monomer composition (Ib) (i.e. a mixture of 9.3 parts of DEMMPO and 0.7 part of DEECOMPO). Evaluation results are shown in Table 1.

### <Example 5>

A sheet was obtained in the same manner as in Example 3 except that 10 parts of the monomer composition (Ia) was changed to 10 parts of the monomer composition (Ic) (i.e. a mixture of 7.9 parts of DEMMPO and 2.1 parts of DEECOMPO). Evaluation results are shown in Table 1.

### <Example 6>

A sheet was obtained in the same manner as in Example 2 except that 30 parts of the monomer composition (Ic) and 69 parts of MMA were changed to 15 parts of the monomer composition (Ic) (i.e. a mixture of 11.8 parts of DEMMPO and 3.2 parts of DEECOMPO) and 64 parts of MMA, and the amount of PH-C was changed to 0.02 part. Evaluation results are shown in Table 1.

### <Example 7>

A sheet was obtained in the same manner as in Example 1 except that the amounts of TCDMA and MMA were changed to 0 part and 64 parts, respectively. Evaluation results are shown in Table 1.

### <Comparative Example 1>

A sheet was obtained in the same manner as in Example 1 except that 30 parts of the monomer composition (Ia), 15 parts of TCDMA, 6 parts of MAA, and 49 parts of MMA were changed to 30 parts of the monomer (Id) (DEMMPO), 15 parts of TCDMA, 5.9 parts of MAA, 2.5 parts of MA, and 46.6 parts of MMA, and the amount of the internal release agent was changed to 0 part. Evaluation results are shown in Table 1.

### <Comparative Example 2>

A sheet was obtained in the same manner as in Example 1 except that 30 parts of the monomer composition (Ia), 15 parts of TCDMA, 6 parts of MAA, and 49 parts of MMA were changed to 100 parts of MMA. Evaluation results are shown in Table 1.

### <Comparative Example 3>

A sheet was obtained in the same manner as in Example 1 except that 30 parts of the monomer composition (Ia), 15 parts of TCDMA, 6 parts of MAA, and 49 parts of MMA were changed to 50 parts of the monomer composition (Ia) (i.e. a mixture of 47.3 parts of DEMMPO and 2.7 parts of DEECOMPO), 2 parts of MA, and 40 parts of MMA. Evaluation results are shown in Table 1.

### <Comparative Example 4>

A polymerization reaction was performed in the same manner as in Example 2 except that 30 parts of the monomer composition (Ic) and 49 parts of methyl methacrylate were changed to 40 parts of the monomer composition (Ic) (i.e. a mixture of 31. 6 parts of DEMMPO and 8.4 parts of DEECOMPO) and 39 parts of methyl methacrylate. However, the sheet was broken during a step that the glass cell was cooled to room temperature. Therefore, formability evaluation was not able to be performed. Other evaluations were performed using fragments of the sheet. Evaluation results are shown in Table 1.

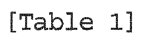

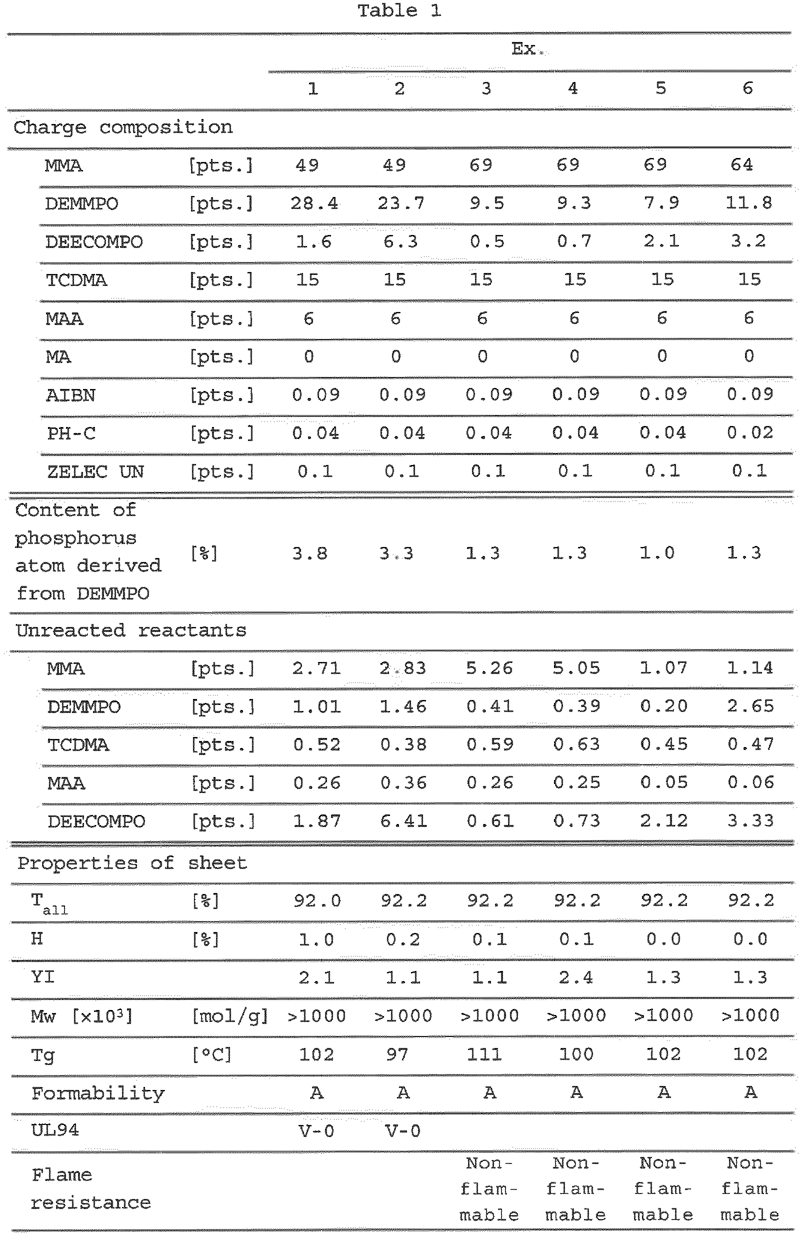

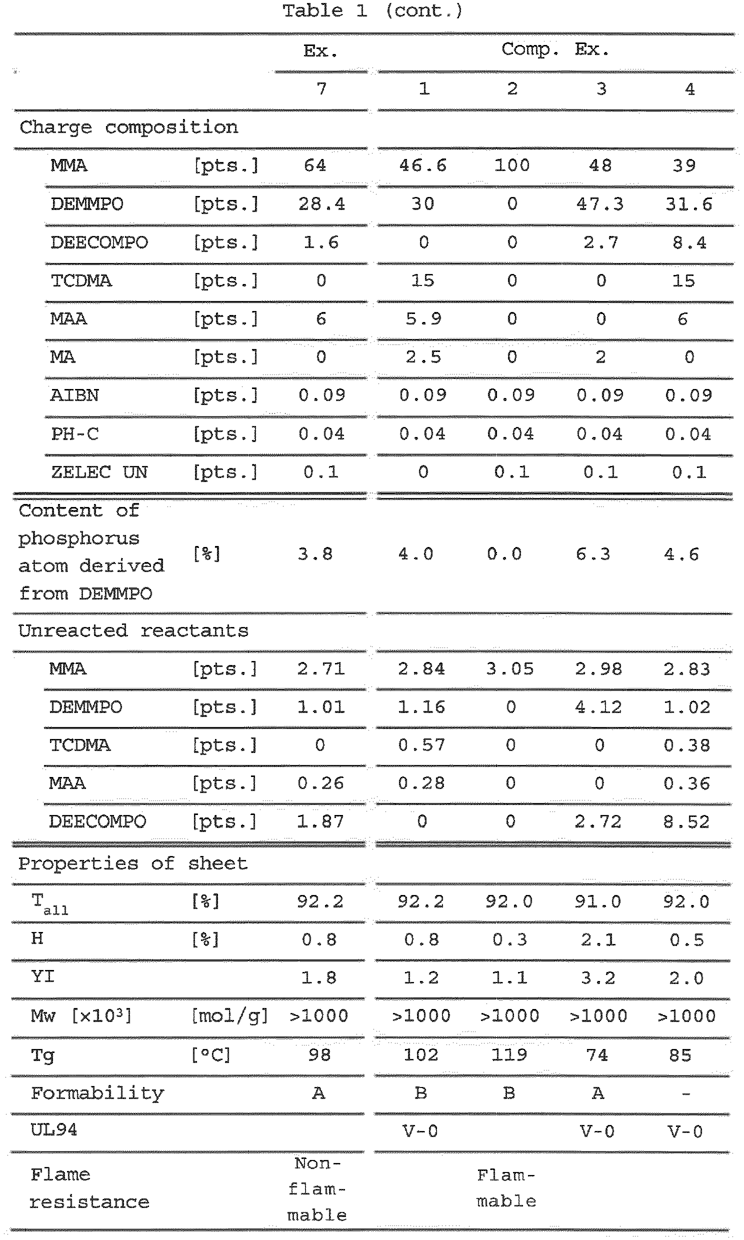

## Claims

1. A monomer composition comprising 100 parts by mass of a monomer represented by a formula (1) and
0.1 to 30 parts by mass of a compound represented by a formula (2), 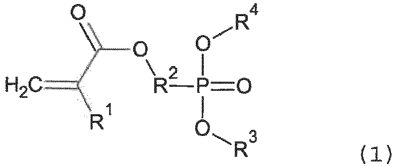
wherein in the formula (1), R¹ represents a hydrogen atom or a methyl group, R² represents an alkylene group having 1 to 4 carbon atoms, and R³ and R⁴ each independently represent a hydrogen atom or an alkyl group having 1 to 10 carbon atoms, 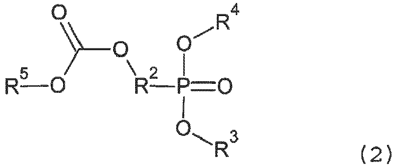
wherein in the formula (2), R² represents an alkylene group having 1 to 4 carbon atoms, R³ and R⁴ each independently represent a hydrogen atom or an alkyl group having 1 to 10 carbon atoms, and R⁵ represents an alkyl group having 1 to 10 carbon atoms.

2. A method for manufacturing the monomer composition according to claim 1, the method comprising allowing a compound represented by a formula (3) to react with a compound represented by a formula (4), 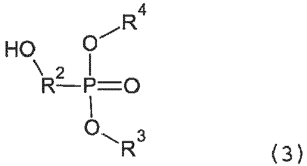
wherein in the formula (3), R² represents an alkylene group having 1 to 4 carbon atoms, and R³ and R⁴ each independently represent a hydrogen atom or an alkyl group having 1 to 10 carbon atoms, 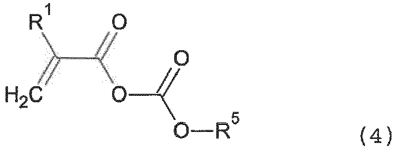
wherein in the formula (4), R¹ represents a hydrogen atom or a methyl group, and R⁵ represents an alkyl group having 1 to 10 carbon atoms.

3. A method for manufacturing a copolymer composition, wherein the copolymer composition comprises 100 parts by mass of a copolymer comprising a structural unit derived from a monomer represented by a formula (1) and a structural unit derived from another radical polymerizable monomer, and having a content of a phosphorus atom derived from the monomer represented by the formula (1) of 0.5 to 6.0% by mass, and 0.01 to 7.0 parts by mass of a compound represented by a formula (2), 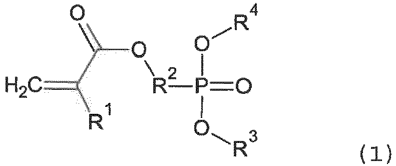
wherein in the formula (1), R¹ represents a hydrogen atom or a methyl group, R² represents an alkylene group having 1 to 4 carbon atoms, and R³ and R⁴ each independently represent a hydrogen atom or an alkyl group having 1 to 10 carbon atoms, 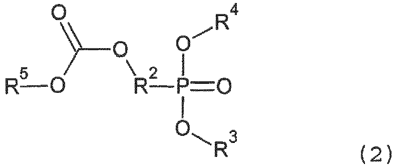
wherein in the formula (2), R² represents an alkylene group having 1 to 4 carbon atoms, R³ and R⁴ each independently represent a hydrogen atom or an alkyl group having 1 to 10 carbon atoms, and R⁵ represents an alkyl group having 1 to 10 carbon atoms;
wherein the method comprises the method for manufacturing a monomer composition according to claim 2 to obtain a monomer composition comprising 100 parts by mass of the monomer represented by a formula (1) and 0.1 to 30 parts by mass of the compound represented by a formula (2), and copolymerizing the monomer represented by the formula (1) with the other radical polymerizable monomer in the presence of the compound represented by the formula (2) .

4. The method according to claim 3, wherein at least one of the radical polymerizable monomer is a (meth) acrylic acid ester.

## Patentansprüche

1. Monomerzusammensetzung, umfassend 100 Massenanteile eines Monomers, dargestellt durch eine Formel (1) und
0,1 bis 30 Massenanteile einer Verbindung, dargestellt durch eine Formel (2), 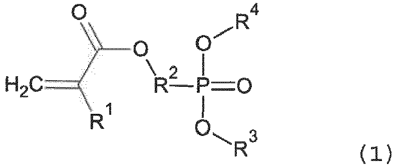
wobei in der Formel (1) R¹ ein Wasserstoffatom oder eine Methylgruppe darstellt, R² eine Alkylengruppe mit 1 bis 4 Kohlenstoffatomen darstellt und R³ und R⁴ jeweils unabhängig voneinander ein Wasserstoffatom oder eine Alkylgruppe mit 1 bis 10 Kohlenstoffatomen darstellen, 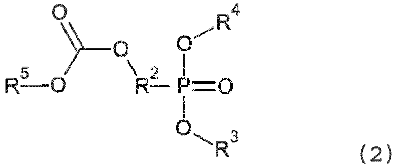
wobei in der Formel (2) R² eine Alkylengruppe mit 1 bis 4 Kohlenstoffatomen darstellt, R³ und R⁴ jeweils unabhängig voneinander ein Wasserstoffatom oder eine Alkylgruppe mit 1 bis 10 Kohlenstoffatomen darstellen und R⁵ eine Alkylgruppe mit 1 bis 10 Kohlenstoffatomen darstellt.

2. Verfahren zur Herstellung der Monomerzusammensetzung nach Anspruch 1, wobei das Verfahren das Reagierenlassen einer Verbindung, dargestellt durch eine Formel (3), mit einer Verbindung, dargestellt durch eine Formel (4), umfasst, 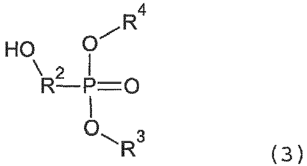
wobei in der Formel (3) R² eine Alkylengruppe mit 1 bis 4 Kohlenstoffatomen darstellt und R³ und R⁴ jeweils unabhängig voneinander ein Wasserstoffatom oder eine Alkylgruppe mit 1 bis 10 Kohlenstoffatomen darstellen, 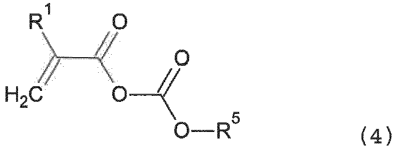
wobei in der Formel (4) R¹ ein Wasserstoffatom oder eine Methylgruppe darstellt und R⁵ eine Alkylgruppe mit 1 bis 10 Kohlenstoffatomen darstellt.

3. Verfahren zur Herstellung einer Copolymerzusammensetzung, wobei die Copolymerzusammensetzung 100 Massenanteile eines Copolymers, umfassend eine Struktureinheit, die von einem Monomer, dargestellt durch eine Formel (1), abgeleitet ist, und eine Struktureinheit, die von einem anderen radikalisch polymerisierbaren Monomer abgeleitet ist, und einen Gehalt an einem Phosphoratom, das von dem Monomer, dargestellt durch die Formel (1), abgeleitet ist, von 0,5 bis 6,0 Massenanteile aufweist, und 0,01 bis 7,0 Massenanteile einer Verbindung, dargestellt durch eine Formel (2), umfasst, 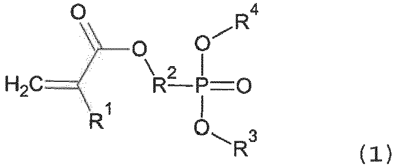
wobei in der Formel (1) R¹ ein Wasserstoffatom oder eine Methylgruppe darstellt, R² eine Alkylengruppe mit 1 bis 4 Kohlenstoffatomen darstellt und R³ und R⁴ jeweils unabhängig voneinander ein Wasserstoffatom oder eine Alkylgruppe mit 1 bis 10 Kohlenstoffatomen darstellen, 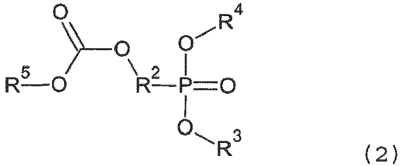
wobei in der Formel (2) R² eine Alkylengruppe mit 1 bis 4 Kohlenstoffatomen darstellt, R³ und R⁴ jeweils unabhängig voneinander ein Wasserstoffatom oder eine Alkylgruppe mit 1 bis 10 Kohlenstoffatomen darstellen und R⁵ eine Alkylgruppe mit 1 bis 10 Kohlenstoffatomen darstellt;
wobei das Verfahren das Verfahren zur Herstellung einer Monomerzusammensetzung nach Anspruch 2, um eine Monomerzusammensetzung zu erhalten, die 100 Massenanteile des Monomers, dargestellt durch eine Formel (1), und 0,1 bis 30 Massenanteile der Verbindung, dargestellt durch eine Formel (2), und
das Copolymerisieren des Monomers, dargestellt durch die Formel (1), mit dem anderen radikalisch polymerisierbaren Monomer in Gegenwart der Verbindung, dargestellt durch die Formel (2), umfasst.

4. Verfahren nach Anspruch 3, wobei mindestens eines des radikalisch polymerisierbaren Monomers ein (Meth)acrylsäureester ist.

## Revendications

1. Composition de monomères, comprenant : 100 parties en masse d'un monomère représenté par la formule (1), et 0,1 à 30 parties en masse d'un composé représenté par la formule (2), 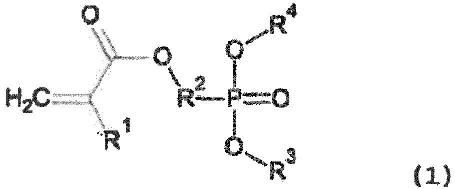
où dans la formule (1), R¹ représente un atome d'hydrogène ou un groupe méthyle, R² représente un groupe alkylène ayant 1 à 4 atomes de carbone, et R³ et R⁴ représentent chacun indépendamment, un atome d'hydrogène ou un groupe alkyle ayant 1 à 10 atomes de carbone, 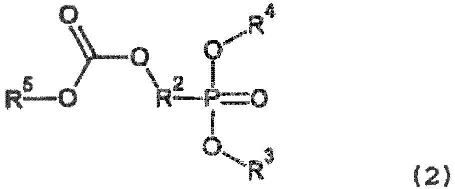
où dans la formule (2), R² représente un groupe alkylène ayant 1 à 4 atomes de carbone, R³ et R⁴ représentent chacun indépendamment, un atome d'hydrogène ou un groupe alkyle ayant 1 à 10 atomes de carbone, et R⁵ représente un groupe alkyle ayant 1 à 10 atomes de carbone.

2. Procédé de préparation de la composition de monomères selon la revendication 1, le procédé comprenant la réaction d'un composé représenté par la formule (3) avec un composé représenté par la formule (4), 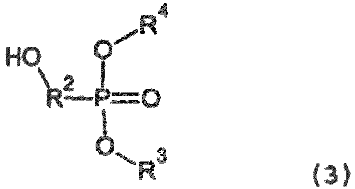
où dans la formule (3), R² représente un groupe alkylène ayant 1 à 4 atomes de carbone, R³ et R⁴ représentent chacun indépendamment, un atome d'hydrogène ou un groupe alkyle ayant 1 à 10 atomes de carbone, 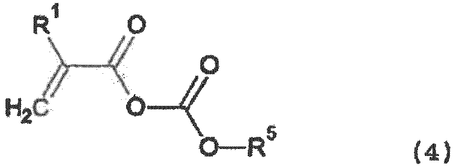
où dans la formule (4), R¹ représente un atome d'hydrogène ou un groupe méthyle, et R⁵ représente un groupe alkyle ayant 1 à 10 atomes de carbone.

3. Procédé de préparation d'une composition copolymère, dans lequel la composition copolymère comprend 100 parties en masse d'un copolymère comprenant une unité structurale dérivée d'un monomère représenté par la formule (1) et d'une unité structurale dérivée d'un autre monomère polymérisable de manière radicalaire, et ayant une teneur en atome de phosphore dérivé du monomère représenté par la formule (1) allant de 0,5 à 6,0% en masse, et 0,01 à 7,0 parties en masse d'un composé représenté par la formule (2), 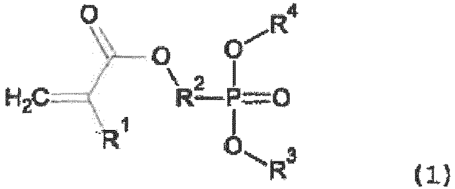
où dans la formule (1), R¹ représente un atome d'hydrogène ou un groupe méthyle, R² représente un groupe alkylène ayant 1 à 4 atomes de carbone, et R³ et R⁴ représentent chacun indépendamment, un atome d'hydrogène ou un groupe alkyle ayant 1 à 10 atomes de carbone, 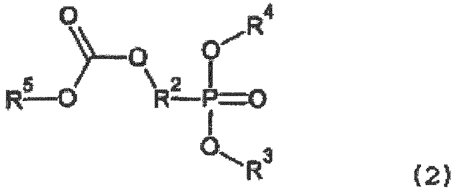
où dans la formule (2), R² représente un groupe alkylène ayant 1 à 4 atomes de carbone, R³ et R⁴ représentent chacun indépendamment, un atome d'hydrogène ou un groupe alkyle ayant 1 à 10 atomes de carbone, et R⁵ représente un groupe alkyle ayant 1 à 10 atomes de carbone ;
dans lequel le procédé comprend la préparation d'une composition de monomères selon la revendication 2 pour obtenir une composition de monomères comprenant 100 parties en masse d'un monomère représenté par la formule (1), et 0,1 à 30 parties en masse d'un composé représenté par la formule (2), et la copolymérisation du monomère représenté par la formule (1) avec l'autre monomère polymérisable de manière radicalaire en présence du composé représenté par la formule (2).

4. Procédé selon la revendication 3, dans lequel au moins l'un du monomère polymérisable de manière radicalaire est un ester d'acide (méth)acrylique.
